# EUROPÄISCHE PATENTANMELDUNG

(11) **EP 1 669 382 A2**
(43) Veröffentlichungstag der Anmeldung: **14.06.2006**
(21) Anmeldenummer: 05026058.7
(22) Anmeldetag: 30.11.2005
(51) Int. Cl.: C08G 18/08, C08G 18/12, C08G 18/38, C09D 175/02

(54) **Festkörperreiche Polyurethanpolyharnstoff-Dispersionen**

(30) Priorität: 13.12.2004 DE 102004060139
(71) Anmelder: Bayer MaterialScience AG, 51368 Leverkusen (DE)
(72) Erfinder: Rische, Thorsten, Dr., 59423 Unna (DE); Kurek, Gerald, Dr., 51373 Leverkusen (DE); Casselmann, Holger, Dr., 51519 Odenthal (DE); Feller, Thomas, 42659 Solingen (DE); Münzmay, Thomas, Dr., 41539 Dormagen (DE); Schütze, Detlef-Ingo, Dr., 51519 Odenthal (DE); Blum, Harald, Dr., 51375 Leverkusen (DE); Müller, Hans-Georg, Dr., 51379 Leverkusen (DE)

(57) **Zusammenfassung**

Die Erfindung betrifft bimodale, festkörperreiche Polyurethanpolyharnstoffdispersionen, ein Verfahren zu deren Herstellung und Verwendung.

## Beschreibung

Die Erfindung betrifft bimodale, festkörperreiche Polyurethandispersionen, ein Verfahren zu deren Herstellung und Verwendung.

Bei der Beschichtung von Substraten werden zunehmend wässrige Bindemittel, insbesondere Polyurethan-Polyharnstoff (PUR)-Dispersionen verwendet. Die Herstellung von wässrigen PUR-Dispersionen ist grundsätzlich bekannt. PUR-Dispersionen zeichnen sich im Gegensatz zu vielen anderen wässrigen Bindemittelklassen vor allem durch eine hohe Beständigkeit gegenüber Chemikalien und Wasser, eine hohe mechanische Belastbarkeit sowie eine hohe Zugfestigkeit und Dehnbarkeit aus. Diese Anforderungen werden weitgehend von Polyurethan-Polyharnstoff-Dispersionen des Standes der Technik erfüllt. Die dort genannten Systeme können aufgrund hydrophiler Gruppen selbstemulgierend sein, d.h. sie können ohne Zuhilfenahme externer Emulgatoren in Wasser dispergiert werden und besitzen monomodale Teilchengrößenverteilungen. Damit die Viskosität dieser Dispersionen in einem für anwendungstechhische Belange vertretbaren Rahmen bleibt, sind diese üblicherweise mit Festkörpergehalten zwischen 30 und 45 Gew.-% Festkörperanteil im Handel erhältlich. Für viele Anwendungsgebiete im Beschichtungsbereich wäre es jedoch wünschenswert, PUR-Dispersionen mit signifikant höheren Festkörperanteilen zur Verfügung zu haben. Diese könnten beispielsweise Applikationsprozesse vereinfachen (Erzeugung höherer Auflagen in einer Schicht) sowie den Zugang zu völlig neuen Anwendungen bzw. Anwendungsgebieten eröffnen.

Nachteilig an den festkörperreichen PUR-Dispersionen des Standes der Technik ist, dass sie vielfach den geforderten Ansprüchen nicht genügen. Sie werden allgemein über hohe Mengen an externen Emulgatoren stabilisiert, besitzen breit verteilte monomodale Teilchengrößenverteilungen und hohe mittlere Teilchengrößen. Sie können daher nur durch den Zusatz von Verdickern vor Sedimentation geschützt werden. Die Eigenschaftsprofile dieser festkörperreichen Dispersionen liegen daher deutlich unterhalb des geforderten Niveaus.

Aus dem Stand der Technik ist bekannt, dass bimodale Dispersionen zwei separate Maxima in der Teilchengrößenverteilung aufweisen und die Bimodalität eine Möglichkeit zur Erhöhung des Feststoffgehalts von Dispersionen ist. Im Vergleich führen monodisperse Systeme, die nur kleine oder nur große Polymerteilchen beinhalten, aufgrund des Viskositätsproblems nur zu geringen Feststoffgehalten.

In den US-P 4,474,860 sowie US-P 4,567,099 werden festkörperreiche bimodale Styrol/Butadien-Latices mit exakt bimodaler Teilchengrößenverteilung und niedriger Viskosität beschrieben. Polyurethan-Polyharnstoffdispersionen werden hingegen nicht offenbart.

In der WO-A 02/070615 werden bimodale wässrige Polymer Dispersionen mit zwei diskreten Teilchengrößenmaxima vorgestellt. In den Beispielen wird ausschließlich die Herstellung von primären Polyacrylatdispersionen mit bimodaler Teilchengrößenverteilung beschrieben. Die Herstellung der Bimodalität erfolgt zweistufig, die resultierenden Produkte eignen sich insbesondere zur Papierbeschichtung.

In einem Vortrag auf dem International Waterborne, High Solids and Powder Coatings Symposium 2004 in New Orleans zum Thema "A detailed understanding of Polyurethane Dispersions, their process and applications" beschreiben B. Erdem et al. ein Verfahren zur Herstellung von festkörperreichen Dispersionen durch Verwendung von externen oberflächenaktiven Substanzen in einem kontinuierlichen Herstellprozess. Polyurethan-Dispersionen, die extern hydrophilierende Substanzen enthalten, genügen jedoch häufig nicht den hohen Ansprüchen an Lack- und Beschichtungsmittel bzw. an Klebstoffe. Außerdem ermöglicht dieser Prozess nicht die gezielte Herstellung von bimodalen Dispersionen. Der Einbau von Hardsegmentstruktureinheiten in größeren Mengen ist ebenfalls nicht möglich, da die handhabbaren Viskositäten bei diesem Verfahren sehr beschränkt sind.

Die Aufgabe der vorliegenden Erfindung bestand somit in der Bereitstellung von Polyurethan-Polyharnstoff(PUR)-Dispersionen mit einem hohen Feststoffgehalt bei gleichzeitiger niedriger Viskosität, die nicht über externe Emulgatoren stabilisiert sind.

Es wurde nun überraschenderweise gefunden, dass durch Einhalten eines bestimmten Verhältnisses der Teilchengrößen niedrigviskose PUR-Dispersionen erhalten werden können, die die Nachteile des Standes der Technik überwinden.

Die Größe der großen und der kleinen Polymerteilchen der bimodalen Dispersion muss dabei so gewählt und auf einander abgestimmt werden, dass das Beschichtungsmittel einen hohen Festkörper bei gleichzeitig geringer Viskosität aufweist. Sind die Teilchen zu klein, nimmt der Feststoffgehalt ab bzw. die Viskosität steigt an; sind die Teilchen zu groß, nimmt die Viskosität zu und die anwendungstechnischen Eigenschaften sowie die Stabilität sind nicht mehr ausreichend.

Gegenstand der vorliegenden Erfindung sind daher wässrige Polyurethan-Polyharnstoff-Dispersionen mit zwei diskreten Maxima in der Teilchengrößenverteilung, dadurch gekennzeichnet, dass das Maximum des Feinanteils zwischen 51 und 150 nm, bevorzugt zwischen 55 und 145 nm und das Maximum des Grobanteils zwischen 160 und 700 nm, bevorzugt zwischen 200 und 700 nm liegt.

Die erfindungsgemäßen festkörperreichen bimodalen Polyurethandispersionen sind außerdem dadurch gekennzeichnet, dass die Polyurethan-Partikel des Feinanteils eine Teilchengröße zwischen 1 und 300 nm, bevorzugt 5 bis 300 nm und besonders bevorzugt 10 bis 275 nm aufweisen. Der Grobanteil der Dispersion weist Polyurethan-Partikel zwischen 100 bis 1500 nm, bevorzugt 125 bis 1250 und besonders bevorzugt zwischen 160 bis 1000 nm auf.

Darüber hinaus sind die bimodalen PUR-Dispersionen dadurch gekennzeichnet, dass sie einen Feinanteil zwischen 10-50 Gew.-%, bevorzugt 15-45 Gew.-% und besonders bevorzugt 20-40 Gew.-% sowie einen Grobanteil zwischen 50-90 Gew.-%, bevorzugt 55-85 Gew.-% und besonders bevorzugt 60-80 Gew.-% enthalten, wobei sich die Summe der Gewichtsanteile aus Grob- und Feinanteil zu 100 Gew.-% addieren.

Die erfindungsgemäßen bimodalen PUR-Dispersionen sind außerdem dadurch gekennzeichnet, dass sie eine Viskosität von 1 bis 1500 mPa*s, bevorzugt 10 bis 750 mPa*s und besonders bevorzugt 10 bis 500 mPa*s besitzen.

Die Partikel des Fein- und Grobanteils unterscheiden sich signifikant hinsichtlich ihre Ladungen pro Masse. Der Feinanteil trägt eine Gesamtoberflächenladung von 50 bis 750 µeq/g Festharz, bevorzugt von 50 bis 700 µeq/g Festharz, besonders bevorzugt von 50 bis 650 µeq/g Festharz. Der Grobanteil besitzt eine Oberflächenladung von 1 bis 300 µeq/g Festharz, bevorzugt 10 bis 250 µeq/g Festharz, besonders bevorzugt 10 bis 200 µeq/g Festharz, wobei sich die Oberflächenladungsdifferenz zwischen Fein- und Grobanteil 10 bis 500 µeq/g Festharz, bevorzugt 20 bis 450 µeq/g Festharz und besonders bevorzugt 20 bis 400 µeq/g beträgt.

Gegenstand der vorliegenden Erfindung ist auch ein Verfahren zur Herstellung der erfindungsgemäßen Polyurethan-Polyharnstoff-Dispersionen, dadurch gekennzeichnet, dass die Komponenten ausgewählt aus der Gruppe der
I.1) Polyisocyanate,
1.2) Polyole mit zahlenmittleren Molekulargewichten von 200 bis 8 000 g/mol,
1.3) niedermolekulare Verbindungen des Molgewichts 62 bis 400 die in Summe über zwei oder mehr Hydroxyl- und/oder Aminogruppen verfügen,
1.4) Verbindungen, die über eine Hydroxy- oder Aminogruppe verfügen,
I.5) isocyanatreaktive, ionisch oder potentiell ionisch hydrophilierende Verbindungen,
1.6) isocyanatreaktive, nichtionisch hydrophilierenden Verbindungen, so umgesetzt werden, dass zunächst ein harnstoffgruppenfreies, isocyanatfunktionelles Prepolymer hergestellt wird, wobei das Stoffmengenverhältnis von Isocyanatgruppen zu mit Isocyanat reaktiven Gruppen 1,0 bis 3,5, bevorzugt 1,1 bis 3,0 besonders bevorzugt 1,1 bis 2,5 beträgt und anschließend die verbliebenen Isocyanat-Gruppen vor, während oder in Wasser nach dem Dispergieren aminofunktionell kettenverlängert oder -terminiert werden, wobei der Gehalt an =N⁺ =, =S⁺-, -COO⁻oder -SO₃ oder PO₃²⁻ Gruppen zwischen 0,1 bis 15 Milliequivalent pro 100g Festharz beträgt und das Äquivalentverhältnis von isocyanatreaktiven Gruppen der zur Kettenverlängerung eingesetzten Verbindungen zu freien Isocyanat-Gruppen des Prepolymers zwischen 40 bis 150 %, bevorzugt zwischen 50 bis 120 %, besonders bevorzugt zwischen 60 bis 120 % liegt.

Geeignete Polyisocyanate der Komponente I.1) sind die dem Fachmann an sich bekannten aromatischen, araliphatischen, aliphatischen oder cycloaliphatischen Polyisocyanate einer NCO-Funktionalität von bevorzugt ≥ 2.

Beispiele solcher geeigneten Polyisocyanate sind 1,4-Butylendiisocyanat, 1,6- Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat, 1,5-Naphthylendiisocyanat, 2,2'- und/oder 2,4'- und/oder 4,4'-Diphenylmethandiisocyanat, 1,3- und/oder 1,4-Bis-(2-isocyanato-prop-2-yl)-benzol (TMXDI), 1,3-Bis(iso-cyanato-methyl)benzol (XDI).

Neben den vorstehend genannten Polyisocyanaten können anteilig auch modifizierte Diisocyanate mit Uretdion-, Isocyanurat-, Urethan-, Allophanat-, Biuret-, Iminooxadiazindion- und/oder Oxadiazintrionstruktur sowie nicht-modifiziertes Polyisocyanat mit mehr als 2 NCO-Gruppen pro Molekül z.B. 4-Isocyanatomethyl-1,8-octandiisocyanat (Nonantriisocyanat) oder Triphenylmethan-4,4',4"-triisocyanat mit eingesetzt werden.

Bevorzugt handelt es sich um Polyisocyanate oder Polyisocyanatgemische der vorstehend genannten Art-mit ausschließlich aliphatisch und/oder cyclioaliphatisch gebundenen Isocyanat-gruppen und einer mittleren NCO-Funktionalität der Mischung von 2 bis 4, bevorzugt 2 bis 2,6 und besonders bevorzugt 2 bis 2,4.

Besonders bevorzugt werden in I.1) Hexamethylendiisocyanat, Isophorondiisocyanat, die isomeren Bis-(4,4'-isocyanatocyclohexyl)methane, sowie deren Mischungen eingesetzt.

Als Verbindungen I.2) einsetzbare Polyole weisen bevorzugt ein Molekulargewicht Mn von 400 bis 8000, besonders bevorzugt von 600 bis 3000 auf. Ihre Hydroxylzahl beträgt 22 bis 400 mg KOH/g, bevorzugt 30 bis 200 mg KOH/g und besonders bevorzugt 40 bis 160 mg KOH/g, und weisen eine OH-Funktionalität von 1,5 bis 6, bevorzugt von 1,8 bis 3 und besonders bevorzugt von 2 auf.

Polyole im Sinne der vorliegenden Erfindung sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/-Formaldehydharze, allein oder in Mischungen.

Gut geeignete Beispiele für Polyesterpolyole sind die an sich bekannten Polykondensate aus Disowie gegebenenfalls Poly(Tri,Tetra)olen und Di- sowie gegebenenfalls Poly(Tri,Tetra)-carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin Propandiol, Butandiol(1,4), Hexandiol(1,6), Neopentylglykol oder Hydroxypivalinsäureneopentylglykolester, wobei die drei letztgenannten Verbindungen bevorzugt sind. Als gegebenenfalls mit einzusetzende Polyole sind hier beispielsweise Trimethylolpropan, Glycerin, Erythrit, Pentaerythrit, Trimethylolbenzol oder Trishydroxyethylisocyanurat zu nennen.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlor-phthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure verwendet werden, vorausgesetzt, dass die mittlere Funktionalität des Polyols höher als 2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigem Hydroxyl verwendet werden können, sind beispielsweise Hydroxycapronsäure, Hydroxybuttersäure, Hydroxydecansäure, Hydroxystearinsäure und dergleichen. Brauchbare Lactone sind u. a. Caprolacton, Butyrolacton und dergleichen.

Verbindungen der Komponente I.2) können zumindest anteilig auch primäre oder sekundäre Aminogruppen als NCO-reaktive Gruppen enthalten.

Als Verbindungen I.2) kommen ebenfalls Hydroxylgruppen aufweisenden Polycarbonate des Molekulargewichts Mₙ von 400 bis 6000, bevorzugt 600 bis 3000 in Frage, die z.B. durch Reaktion von Kohlensäurederivaten, z.B. Diphenylcarbonat, Dimethylcarbonat oder Phosgen mit Polyolen, bevorzugt Diolen erhältlich sind. Als derartige Diole kommen z.B. Ethylenglykol, 1,2-und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkomponente 40 bis 100 Gew.-% Hexandiol, bevorzugt 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton oder durch Veretherung von Hexandiol mit sich selbst zum Di- oder Trihexylenglykol erhalten wurden. Auch Polyether-Polycarbonatdiole können eingesetzt werden. Die Hydroxylpolycarbonate sollten im wesentlichen linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, Sorbit, Methylglykosid oder 1,3,4,6-Dianhydrohexite.

Als Polyetherpolyole entsprechend der Definition der Verbindungen I.2) geeignet sind die in der Polyurethanchemie an sich bekannten Polytetramethylenglykolpolyether, die z.B. über Polymerisation von Tetrahydrofuran durch kationische Ringöffnung hergestellt werden können.

Darüber hinaus geeignete Polyetherpolyole sind Polyether, wie z.B. die unter Verwendung von Startermolekülen hergestellten Polyole aus Styroloxid, Ethylenoxid, Propylenoxid, Butylenoxide oder Epichlorhydrins, insbesondere des Propylenoxids.

Die zum Aufbau der Polyurethanharze eingesetzten niedermolekularen Polyole I.3) bewirken in der Regel eine Versteifung und oder eine Verzweigung der Polymerkette. Das Molekulargewicht liegt bevorzugt zwischen 62 und 200. Geeignete Polyole I.3) können aliphatische, alicyclische oder aromatische Gruppen enthalten. Genannt seien hier beispielsweise die niedermolekularen Polyole mit bis zu etwa 20 Kohlenstoffatomen je Molekül, wie z. B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Neopentylglykol, Hydrochinondihydroxyethylether, Bisphenol A (2,2-Bis(4-hydroxyphenyl)propan), hydriertes Bisphenol A (2,2-Bis(4-hydroxycyclo-hexyl)propan), sowie Trimethylolpropan, Glycerin oder Pentaerythrit und Mischungen dieser und gegebenenfalls auch weiterer niedermolekularer Polyole I.3). Auch Esterdiole wie z.B. α-Hydroxybutyl-ε-hydroxy-capronsäureester, ω-Hydroxyhexyl-γ-hydroxybuttersäure-ester, Adipinsäure-(β-hydroxyethyl)ester oder Terephthalsäurebis(β-hydroxyethyl)-ester können verwendet werden.

Di- oder Polyamine sowie Hydrazide können ebenfalls als I.3) eingesetzt werden, z.B. Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin oder Adipinsäuredihydrazid.

Als I.3) kommen prinzipiell auch Verbindungen in Betracht, die aktiven Wasserstoff mit gegenüber NCO-Gruppen unterschiedlicher Reaktivität enthalten, wie Verbindungen, die neben einer primären Aminogruppe auch sekundäre Aminogruppen oder neben einer Aminogruppe (primär oder sekundär) auch OH-Gruppen aufweisen. Beispiele hierfür sind primäre/sekundäre Amine, wie 3-Amino-1-Methylaminopropan, 3-Amino-1-Ethylaminopropan, 3-Amino-1-cyclohexylaminopropan, 3-Amino-1- Methylaminobutan, weiterhin Alkanolamine wie N-Aminoethylethanolamin, Ethanolamin, 3-Aminopropanol, Neopentanolamin und besonders bevorzugt Diethanolamin. Diese können bei der Herstellung der erfindungsgemäßen PUR-Dispersion als Kettenverlängerer und/oder als Kettenterminierung eingesetzt werden.

Die erfindungsgemäßen PUR-Dispersionen können auch gegebenenfalls Bausteine I.4) enthalten, die sich jeweils an den Kettenenden befinden und diese abschließen. Diese Bausteine leiten sich zum einen von monofunktionellen, mit NCO-Gruppen reaktiven Verbindungen ab, wie Monoaminen, insbesondere mono-sekundären Aminen oder Monoalkoholen. Genannt seien hier beispielsweise Ethanol, n-Butanol, Ethylenglykol-monobutylether, 2-Ethylhexanol, 1-Octanol, 1-Dodecanol, 1-Hexadecanol, Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketim von diprimären Aminen, primär/tertiäre Amine, wie N,N-Dimethylaminopropylamin und dergleichen.

Unter ionisch bzw. potentiell ionisch hydrophilierenden Verbindungen I.5) werden sämtliche Verbindungen verstanden, die mindestens eine isocyanatreaktive Gruppe sowie mindestens eine Funktionalität, wie z.B. -COOY, -SO₃Y, -PO(OY)₂ (Y beispielsweise = H, NH₄⁺, Metallkation), -NR₂, -NR₃⁺ (R = H, Alkyl, Aryl), aufweisen, die bei Wechselwirkung mit wässrigen Medien ein pH-Wert-abhängiges Dissoziationsgleichgewicht eingeht und auf diese Weise negativ, positiv oder neutral geladen sein kann. Bevorzugte isocyanatreaktive Gruppen sind Hydroxyl- oder Aminogruppen.

Geeignete ionisch oder potentiell ionisch hydrophilierende Verbindungen entsprechend der Definition der Komponente I.5) sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder -butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie Verbindungen, die in kationische Gruppen überführbare, z.B. Amin-basierende, Bausteine wie N-Methyl-diethanolamin als hydrophile Aufbaukomponenten enthalten. Weiterhin kann Cyclohexylaminopropansulfonsäure (CAPS) wie z.B. in der WO-A 01/88006 als Verbindung entsprechend der Definition der Komponente I.5) verwendet werden.

Bevorzugte ionische oder potentielle ionische Verbindungen I.5) sind solche, die über Carboxy-oder Carboxylat- und/oder Sulfonatgruppen und/oder Ammoniumgruppen verfügen. Besonders bevorzugte ionische Verbindungen I.5) sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierende Verbindungen entsprechend der Definition der Komponente I.6 sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind.

Nichtionisch hydrophilierende Verbindungen I.6) sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die min-destens 40 mol-% Ethylenoxid- und maximal 60 mol-% Propylenoxideinheiten aufweisen.

Bevorzugt werden 5 bis 40 Gew.-% Komponente I.1), 55 bis 95 Gew.-% Komponente I.2), 0,5 bis 20 Gew.-% der Summe von Verbindungen I.3) und I.4), 0,1 bis 5 Gew.-% Komponente I.5), 0 bis 20 Gew.-% Komponente I.6) eingesetzt, wobei die Summe von I.5) und I.6) 0,1 bis 25 Gew.-% beträgt und sich die Summe aller Komponenten zu 100 Gew.-% addiert.

Besonders bevorzugt werden 5 bis 35 Gew.% Komponente I.1), 60 bis 90 Gew.-% Komponente I.2), 0,5 bis 15 Gew.-% der Summe von Verbindungen I.3) und I.4), 0,1 bis 4 Gew.-% Komponente I.5), 0 bis 15 Gew.-% Komponente I.6) eingesetzt, wobei die Summe von I.5) und I.6) 0,1 bis 19 Gew.-% beträgt und sich die Summe aller Komponenten zu 100 Gew.-% addiert.

Ganz besonders bevorzugt werden 10 bis 30 Gew.-% Komponente I.1), 65 bis 85 Gew.-% Komponente I.2), 0,5 bis 14 Gew.-% der Summe von Verbindungen I.3), 0,1 bis 3,5 Gew.-% Komponente I.5), 0 bis 10 Gew.-% Komponente I.6) eingesetzt, wobei die Summe von I.5) und I.6) 0,1 bis 13,5 Gew.-% beträgt und sich die Summe aller Komponenten zu 100 Gew.-% addiert.

Das Verfahren zur Herstellung der wässrigen PUR-Dispersion (I) kann in einer oder mehreren Stufen in homogener oder bei mehrstufiger Umsetzung, teilweise in disperser Phase durchgeführt werden. Nach vollständig oder teilweise durchgeführter Polyaddition aus I.1) - I.6) erfolgt ein Dispergier-, Emulgier- oder Lösungsschritt. Im Anschluss erfolgt gegebenenfalls eine weitere Polyaddition oder Modifikation in disperser Phase.

Zur Herstellung der erfindungsgemäßen wässrigen PUR-Dispersionen können alle aus dem Stand der. Technik bekannten Verfahren wie z. B. Prepolymer-Mischverfahren, Acetonverfahren oder Schmelzdispergierverfahren verwendet werden. Bevorzugt werden die erfindungsgemäßen PUR-Dispersionen nach dem Aceton-Verfahren hergestellt.

Für die Herstellung der PUR-Dispersion (I) nach dem Aceton-Verfahren werden üblicherweise die Bestandteile I.2) bis I.6), die keine primären oder sekundären Aminogruppen aufweisen dürfen und die Polyisocyanatkomponente I.1) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden. Bevorzugt ist Dibutylzinndilaurat.

Geeignete Lösungsmittel sind die üblichen aliphatischen, ketofunktionellen Lösemittel wie z.B. Aceton, Butanon, die nicht nur zu Beginn der Herstellung, sondern gegebenenfalls in Teilen auch später zugegeben werden können. Bevorzugt sind Aceton und Butanon. Andere Lösemittel wie z.B. Xylol, Toluol, Cyclohexan, Butylacetat, Methoxypropylacetat, Lösemittel mit Ether- oder Estereinheiten können ebenfalls eingesetzt und ganz oder teilweise abdestilliert werden oder vollständig in der Dispersion verbleiben.

Anschließend werden die gegebenenfalls zu Beginn der Reaktion noch nicht zugegebenen Bestandteile von I.1)-I.6) zudosiert.

Bei der Herstellung des Polyurethan-Prepolymeren beträgt das Stoffmengenverhältnis von Isocyanatgruppen zu mit Isocyanat reaktiven Gruppen 1,0 bis 3,5, bevorzugt 1,1 bis 3,0, besonders bevorzugt 1,1 bis 2,5.

Die Umsetzung der Komponenten I.1) - I.6) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Nach oder während der Herstellung der Polyurethan-Prepolymere erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie tertiäre Amine, z.B. Trialkylamine mit 1 bis 12, bevorzugt 1 bis 6 C-Atomen in jedem Alkylrest eingesetzt. Beispiele hierfür sind Trimethylamin, Triethylamin, Methyldiethylamin, Tripropylamin, N-methylmorpholin, Methyldiisopropylamin, Ethyldiisopropylamin und Diisopropylethylamin. Die Alkylreste können beispielsweise auch Hydroxylgruppen tragen, wie bei den Dialkylmonoalkanol-, Alkyldialkanol- und Trialkanolaminen. Als Neutralisationsmittel sind gegebenenfalls auch anorganische Basen, wie Ammoniak oder Natrium- bzw. Kaliumhydroxid einsetzbar. Bevorzugt sind Triethylamin, Triethanolamin, Dimethylethanolamin oder Diisopropylethylamin.

Die Stoffmenge der Basen liegt zwischen 50 und 125 %, bevorzugt zwischen 70 und 100 % der Stoffmenge der anionischen Gruppen. Im Falle kationischer Gruppen werden Schwefelsäuredimethylester oder Bernsteinsäure eingesetzt. Werden nur nichtionisch hydrophilierte Verbindungen I.6) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Im Anschluss wird in einem weiteren Verfahrensschritt, falls noch nicht oder nur teilweise geschehen das erhaltene Prepolymer mit Hilfe von aliphatischen Ketonen wie Aceton oder Butanon gelöst.

Anschließend werden mögliche NH₂- und/oder NH-funktionelle Komponenten mit den noch verbliebenen Isocyanatgruppen umgesetzt. Diese Kettenverlängerung/-terminierung kann dabei entweder in Lösungsmittel vor dem Dispergieren, während des Dispergierens oder in Wasser nach dem Dispergieren durchgeführt werden. Bevorzugt wird die Kettenverlängerung vor der Dispergierung in Wasser durchgeführt.

Werden zur Kettenverlängerung Verbindungen entsprechend der Definition von I.5) mit NH₂- oder NH-Gruppen eingesetzt, erfolgt die Kettenverlängerung der Prepolymere bevorzugt vor der Dispergierung.

Der Kettenverlängerungsgrad, also das Äquivalentverhältnis von NCO-reaktiven Gruppen der zur Kettenverlängerung eingesetzten Verbindungen zu freien NCO-Gruppen des Prepolymers liegt zwischen 40 bis 150 %, bevorzugt zwischen 50 bis 120 %, besonders bevorzugt zwischen 60 bis 120 %.

Die aminischen Komponenten [I.3), I.4), I.5)] können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mitverwendet werden, so beträgt der Verdünnungsmittelgehalt bevorzugt 70 bis 95 Gew.-%.

Die Herstellung der PUR-Dispersion aus den Prepolymeren erfolgt im Anschluss an die Kettenverlängerung. Dazu wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den Prepolymerlösungen gerührt. Bevorzugt wird das Wasser in das gelöste Prepolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Der Feststoffgehalt der PUR-Dispersion liegt zwischen 50 bis 70 Gew.-%, bevorzugt 55 bis 65 Gew.-% und besonders bevorzugt zwischen 58 bis 64 Gew.-%.

Die erfindungsgemäßen PUR-Dispersionen können Antioxidantien und/oder Lichtschutzmittel und/oder andere Hilfs- und Zusatzmittel wie beispielsweise Emulgatoren, Entschäumer, Verdicker enthalten. Schließlich können auch Füllstoffe, Weichmacher, Pigmente, Ruß- und Kieselsäuresole, Aluminium-, Ton-, Asbest-Dispersionen, Verlaufsmittel oder Thixotropiemittel enthalten sein. Je nach gewünschtem Eigenschaftsbild und Verwendungszweck der erfindungsgemäßen PUR-Dispersionen können bis zu 70 %, bezogen auf Gesamttrockensubstanz, solcher Füllstoffe im Endprodukt enthalten sein.

Weiterhin ist es möglich, die erfindungsgemäßen PUR-Dispersionen durch Polyacrylate zu modifizieren. Hierzu wird in Gegenwart der Polyurethan-Dispersion eine Emulsionspolymerisation von olefinisch ungesättigten Monomeren, z. B. Estern aus (Meth)acrylsäure und Alkoholen mit 1 bis 18 C-Atomen, Styrol, Vinylestern oder Butadien durchgeführt, wie es z.B. in der DE-A-1 953 348, EP-A-0 167 188, EP-A-0 189 945 und EP-A-0 308 115 beschrieben ist. Die Monomere enthalten eine oder mehrere olefinische Doppelbindungen. Daneben können die Monomere funktionelle Gruppen wie Hydroxyl-, Epoxy-, Methylol- oder Acetoacetoxygruppen enthalten.

Gegenstand der vorliegenden Erfindung sind auch Beschichtungsmittel, enthaltend die erfindungsgemäßen Polyurethan-Polyharnstoff-Dispersionen.

Zur Verwendung der erfindungsgemäßen PUR-Dispersionen als Beschichtungsmittel werden diese entweder allein oder in Kombination mit anderen wässrigen Bindemitteln eingesetzt. Solche wässrigen Bindemittel können z. B. aus Polyester-, Polyacrylat, Polyepoxid- oder Polyurethanpolymeren aufgebaut sein. Auch die Kombination mit strahlenhärtbaren Bindemitteln, wie sie z. B. in der EP-A-0 753 531 beschrieben sind, ist möglich. Es ist ebenfalls möglich die erfindungsgemäßen PUR-Dispersionen mit anderen anionischen oder nicht-ionischen Dispersionen, wie z.B. Polyvinylacetat, Polyethylen-, Polystyrol-, Polybutadien-, Polyvinylchlorid-, Polyacrylat- und Copolymerisat-Dispersionen, zu verschneiden.

Weiterer Gegenstand der vorliegenden Erfindung ist die Verwendung der erfindungsgemäßen Polyurethan-Polyharnstoff-Dispersionen als Beschichtungsmittel zur Herstellung beschichteter Substrate.

Die erfindungsgemäßen Polyurethan-Polyharnstoff-Dispersionen eignen sich ebenfalls zur Herstellung von Schlichten- oder Klebstoffsystemen.

Geeignete Substrate sind beispielsweise gewebte und nicht gewebte Textilien, Leder, Papier, Hartfaser, Stroh, papierartigen Materialien, Holz, Glas, Kunststoffen der verschiedensten Art, Keramik, Stein, Beton, Bitumen, Porzellan, Metalle oder Glasfasern. Bevorzugte Substrate sind Textilien, Leder, Kunststoffe, metallische Substrate oder mineralische Substrate, besonders bevorzugt sind Textilien und Leder.

Die erfindungsgemäßen PUR-Dispersionen sind stabil, lager- und versandfähig und können zu beliebig späterem Zeitpunkt verarbeitet werden. Sie lassen sich bei relativ niedrigen Temperaturen von 120 bis 150°C innerhalb von 2 bis 3 Minuten zu Beschichtungen mit insbesondere sehr guten Nass-Haftfestigkeiten aushärten.

Je nach der gewählten chemischen Zusammensetzung und Gehalt an Urethangruppen erhält man Beschichtungen mit unterschiedlichen Eigenschaften. So können weiche klebrige Schichten, thermoplastische und gummielastische Produkte der verschiedensten Härtegrade bis zu glasharten Duroplasten erhalten werden. Die Hydrophilie der Produkte kann ebenfalls in gewissen Grenzen schwanken. Die elastischen Produkte lassen sich bei höheren Temperaturen, beispielsweise 100 bis 180°C, thermoplastisch verarbeiten, sofern sie nicht chemisch vernetzt sind.

Die erfindungsgemäßen PUR-Dispersionen sind aufgrund ihrer exzellenten Verschäumbarkeit, ihrer guten Abriebfestigkeit, Kratz-, Knick- und Hydrolysebeständigkeit für Anwendungen im Bereich Polstermöbel, Arbeitsschutz und Autoinnenausstattung besonders geeignet, ebenso zur Herstellung sehr stabiler hoher Schaumauflagen in nur einem Strich, wie sie ansonsten nur mit lösemittelhaltigen High Solid Beschichtungsmitteln zu erzielen sind.

Gegenstand der Erfindung ist somit die Verwendung der erfindungsgemäßen PUR-Dispersionen im Bereich Polstermöbel, Arbeitsschutz und Autöinnenausstattung sowie zur Herstellung hoher Schaumauflagen in nur einem Strich.

### Beispiele:

Soweit nicht abweichend angegeben sind alle Prozentangaben als Gewichtsprozent zu verstehen.

### Verwendete Substanzen und Abkürzungen:

Diaminosulfonat: NH₂-CH₂CH₂-NH-CH₂CH₂-SO₃Na (45 %ig in Wasser)

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

Die Eigenschaften von PUR-Dispersionen werden an freien Filmen bestimmt, die wie folgt hergestellt werden:
In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (nass) der resultierenden Beschichtung, und kann auf die gewünschte Auflage jedes Striches eingestellt werden. Die Beschichtung ist auch konsekutiv in mehreren Strichen möglich.

Zum Aufbringen der einzelnen Striche werden die Produkte (wässrige Formulierungen werden vorher durch Zugabe von Ammoniak/ Polyacrylsäure auf eine Viskosität von 4500 mPa*s gestellt) auf den Spalt zwischen Papier und vorderer Walze gegossen, das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

Die Bestimmung des Moduls bei 100 % Dehnung, erfolgte nach DIN 53504 an Filmen > 100 µm Stärke.

Die Bestimmung der mittleren Teilchengrößen (angegeben ist das Zahlenmittel) der PUR-Dispersionen erfolgte mittels Laserkorrelations-Spektroskopie (Gerät: Malvern Zetasizer 1000, Malvern Inst. Limited).

Die Bestimmung der Teilchengrößenverteilungen erfolgt mit der Methode der analytischen Ultrazentrifugation, die in der Literatur ausführlich beschrieben ist:
1. W. Scholtan, H. Lange, Kolloid-Z. u. Z. Polymere 250 (1972) 782
2. H.G,. Müller, Colloid Polym Sci 267 (1989) 1113

Bei den erhaltenen Verteilungen handelt es sich um Massenverteilungen.

Die Bestimmung der Ladungsverhältnisse der Dispersionen erfolgte mit konduktometrischer Titration. Hierbei wird eine mit Wasser verdünnte Dispersion mit HCI (c(HC1) typisch 0,1n) sauer eingestellt (auf einen pH-Wert von ca. 3, dies wird zumeist durch einen Zusatz an 0,1n Salzsäure von 2,5ml erreicht) und mit NaOH (c(NaOH) typisch 0,05n, maximal 10mL) nach Zusatz eines nichtionischen Stabilisators (5%-ige Brij-96 Lösung) titriert (Titrator: Mettler DL21, Probenwechsler: Mettler Rondo 80, zu titrierendes Volumen: 80-90mL).

Aus der während der Titration bestimmten Leitfähigkeit und dem pH-Wert (pH-Elektrode: Schott H61, Leitfähigkeitselektrode: WTW LTA/KS) ergibt sich eine charakteristische Kurve, aus welcher der Dissoziationsgrad als Funktion des pH errechnet werden kann. Titriert werden einerseits die eingesetzten Säuregruppen, andererseits aber auch das eingesetzte Neutralisationsmittel (hier DMEA) und andere bei der Dispersionsherstellung eventuell entstandene schwach saure und basische Gruppen. Die ermittelten Gruppen liegen an der Partikeloberfläche oder im Serum, sog. verborgene Ladungen im Partikelinneren werden nicht titriert. Die auf diese Weise bestimmte Ladungsmenge der Dispersion wird in den vorne gezeigten Ergebnissen als Gesamtladung bezeichnet. Wird die Dispersion vor der Titration mit einem Ionenaustauscher behandelt, werden die Ladungsgruppen im Serum abgetrennt. Die konduktometrische Titration ergibt dann die Menge an schwach sauren und basischen Gruppen auf der Partikeloberfläche (sog. Oberflächenladung).

Die Viskositäten wurden gemäß DIN EN ISO 3219 /A3 bei einer Temperatur von 23°C ermittelt.

### Beispiel 1: Vergleichsbeispiel PUR-Dispersion (Komponente I)

Impranil® DLN (anionisch hydrophilierte monomodale PUR-Dispersion auf Polyesterbasis mit einem Festkörpergehalt von 40 % und einer mittleren Teilchengröße von 100 - 300 nm, Bayer AG, Leverkusen, DE).

### Beispiel 2:

2210,0 g eines difunktionellen Polyesterpolyols auf Basis Adipinsäure, Neopentylglykol und Hexandiol (mittleres Molekulargewicht 1700 g/mol, OHZ = 66) wurde auf 65°C aufgeheizt. Anschließend wurde bei 65°C innerhalb von 5 min ein Gemisch aus 195,5 g Hexamethylendiisocyanat und 258,3 g Isophorondiisocyanat zugegeben und solange bei 100°C gerührt bis der theoretische NCO-Wert von 3,24% erreicht wurde. Das fertige Prepolymer wurde mit 4800 g Aceton bei 50°C gelöst und anschließend eine Lösung aus 29,7 g Ethylendiamin, 95,7 g Diaminosulfonat und 602 g Wasser innerhalb von 5 min zudosiert. Die Nachrührzeit betrug 15 min. Anschließend wurde innerhalb von 20 min durch Zugabe von 1169 g Wasser dispergiert. Es folgte die Entfernung des Lösemittels durch Destillation im Vakuum und es wurde eine lagerstabile bimodale PUR-Dispersion mit einem Festkörpergehalt von 60 % erhalten. Der Festkörperanteil der Dispersion bestand zu 31 % aus einem Feinanteil und zu 69 % aus einem Grobanteil. Das Maximum des Feinanteils in der Teilchengrößenverteilung betrug 59 nm, das Maximum des Grobanteils 385 nm. Die Dispersionspartikel des Feinanteils hatten Teilchengrößen zwischen 20 nm und 160 nm. Die Partikel des Grobanteils hatten Teilchengrößen zwischen 175 nm und 625 nm. Die Viskosität der Dispersion betrug 196 mPa*s.

Die Dispersion wurde mittels Ultrazentrifugation in Grob- und Feinanteil getrennt. Die Gesamtoberflächenladung des Feinanteils betrug 77 µeq/g Festharz. Die Gesamtoberflächenladung des Grobanteils betrug 35 µeq/g Festharz.

### Beispiel 3:

500,0 g eines difunktionellen Polyesterpolyols auf Basis Phthalsäure und 1,6-Hexandiol (mittleres Molgekulargewicht 2000 g/mol, OHZ = 56) wurde auf 65°C aufgeheizt. Anschließend wurde bei 65°C innerhalb von 5 min ein Gemisch aus 37,6 g Hexamethylendiisocyanat und 49,7 g Isophorondiisocyanat zugegeben und solange bei 100°C gerührt bis der theoretische NCO-Wert von 2,82% erreicht wurde. Das fertige Prepolymer wurde mit 1060 g Aceton bei 50°C gelöst und anschließend eine Lösung aus 4,4 g Ethylendiamin, 27,6 g Diaminosulfonat und 136,3 g Wasser innerhalb von 5 min zudosiert. Die Nachrührzeit betrug 15 min. Anschließend wurde innerhalb von 20 min durch Zugabe von 251,2 g Wasser dispergiert. Es folgte die Entfernung des Lösemittels durch Destillation im Vakuum und es wurde eine lagerstabile bimodale PUR-Dispersion mit einem Festkörpergehalt von 59,8 % erhalten. Der Festkörperanteil der Dispersion bestand zu 35 % aus einem Feinanteil und zu 65 % aus einem Grobanteil. Das Maximum des Feinanteils in der Teilchengrößenverteilung betrug 133 nm, das Maximum des Grobanteils 675 nm. Die Dispersionspartikel des Feinanteils hatten Teilchengrößen zwischen 50 nm und 250 nm. Die Partikel des Grobanteils hatten Teilchengrößen zwischen 300 nm und 1000 nm. Die Viskosität der Dispersion betrug 119 mPa*s.

Die Dispersion wurde mittels Ultrazentrifugation in Grob- und Feinanteil getrennt. Die Gesamtoberflächenladung des Feinanteils betrug 120 µeq/g Festharz. Die Gesamtoberflächenladung des Grobanteils betrug 80 µeq/g Festharz.

### Beispiel 4:

2159,6 g eines difunktionellen Polyesterpolyols auf Basis Adipinsäure, Neopentylglykol und Hexandiol (mittleres Molgekulargewicht 1700 g/mol, OHZ = 66), 72,9 g eines monofunktionellen Polyethers auf Ethylenoxid-/Propylenoxidbasis (70/30) (mittlerem Molekulargewicht 2250 g/mol, OH-Zahl 25 mg KOH/g) wurden auf 65°C aufgeheizt. Anschließend wurde bei 65°C innerhalb von 5 min ein Gemisch aus 241,8 g Hexamethylendiisocyanat und 320,1 g Isophorondiisocyanat zugegeben und solange bei 100°C gerührt bis der theoretische NCO-Wert von 4,79 % erreicht wurde. Das fertige Prepolymer wurde mit 4990 g Aceton bei 50°C gelöst und anschließend eine Lösung aus 187,1 g Isophorondiamin und 322,7 g Aceton innerhalb von 2 min zudosiert. Die Nachrührzeit betrug 5 min. Anschließend wurde innerhalb von 5 min eine Lösung aus 63,6 g Diaminosulfonat, 6,5 g Hydrazinhydrat und 331,7 g Wasser zudosiert. Die Dispergierung erfolgte durch Zugabe von 1640,4 g Wasser. Es folgte die Entfernung des Lösemittels durch Destillation im Vakuum und es wurde eine lagerstabile bimodale PUR-Dispersion mit einem Festkörpergehalt von 58,9 % erhalten. Der Festkörperanteil der Dispersion bestand zu 36 % aus einem Feinanteil und zu 64 % aus einem Grobanteil. Das Maximum des Feinanteils in der Teilchengrößenverteilung betrug 65 nm, das Maximum des Grobanteils 415 nm. Die Dispersionspartikel des Feinanteils hatten Teilchengrößen zwischen 20 nm und 175 nm. Die Partikel des Grobanteils hatten Teilchengrößen zwischen 200 nm und 800 nm. Die Viskosität der Dispersion betrug 32 mPa*s.

Die Dispersion wurde mittels Ultrazentrifugation in Grob- und Feinanteil getrennt. Die Gesamtoberflächenladung des Feinanteils betrug 83 µeq/g Festharz. Die Gesamtoberflächenladung des Grobanteils betrug 23 µeq/g Festharz.

### Beispiel 5:

2100,0 g eines difunktionellen Polycarbonatpolyols auf Basis von 1,6-Hexandiol (mittleres Molgekulargewicht 2000 g/mol, OHZ = 56), 84,4 g eines monofunktionellen Polyethers auf Ethylenoxid-/Propylenoxidbasis (70/30) (mittlerem Molekulargewicht 2250 g/mol, OH-Zahl 25 mg KOH/g), 55,4 g Neopentylglykol und 36,7 g Dimethylolpropionsäure wurden auf 75°C aufgeheizt. Anschließend wurde bei 75°C innerhalb von 5 min ein Gemisch aus 636,2 g Desmodur W und 106,1 g Isophorondiisocyanat zugegeben und solange bei 10°C gerührt bis der theoretische NCO-Wert von 2,9 % erreicht wurde. Das fertige Prepolymer wurde mit 5360 g Aceton bei 50°C gelöst 27,0 g Triethylamin neutralisiert. Anschließend wurde eine Lösung aus 22,6 g Diethylentriamin, 23,9 g Hydrazinhydrat und 166 g Wasser innerhalb von 5 min zudosiert. Die Nachrührzeit betrug 15 min. Die Dispergierung erfolgte durch Zugabe von 1863 g Wasser innerhalb von 20 min. Es folgte die Entfernung des Lösemittels durch Destillation im Vakuum und es wurde eine lagerstabile bimodale PUR-Dispersion mit einem Festkörpergehalt von 60,1 % erhalten. Der Festkörperanteil der Dispersion bestand zu 33 % aus einem Feinanteil und zu 67 % aus einem Grobanteil. Das Maximum des Feinanteils in der Teilchengrößenverteilung betrug 63 nm, das Maximum des Grobanteils 493 nm. Die Dispersionspartikel des Feinanteils hatten Teilchengrößen zwischen 10 nm und 200 nm. Die Partikel des Grobanteils hatten Teilchengrößen zwischen 200 nm und 1000 nm. Die Viskosität der Dispersion betrug 266 mPa*s.

Die Dispersion wurde mittels Ultrazentrifugation in Grob- und Feinanteil getrennt. Die Gesamtoberflächenladung des Feinanteils betrug 360 µeq/g Festharz. Die Gesamtoberflächenladung des Grobanteils betrug 30 µeq/g Festharz.

**Tabelle 1: Mechanische Eigenschaften**

| **Beispiel** | **100% Modul [MPa]** | **Zugfestigkeit [MPa]** | **Bruchdehnung [%]** |
|---|---|---|---|
| 1 (Vergleich) | 2,0 | 20 | 700 |
| 2 (erfindungsgemäß) | 1,0 | 14 | 1300 |
| 3 (erfindungsgemäß) | 1,2 | 13 | 1200 |
| 4 (erfindungsgemäß) | 3,0 | 26 | 1300 |
| 5 (erfindungsgemäß) | 4,3 | 43 | 660 |

Wie aus Tabelle 1 zu entnehmen ist, zeigen die aus den erfindungsgemäßen PUR-Dispersionen hergestellten Beschichtungen ähnlich gute mechanischen Eigenschaften verglichen mit den Beschichtungen des Standes der Technik.

## Patentansprüche

1. Wässrige Polyurethan-Polyharnstoff-Dispersionen mit zwei diskreten Maxima in der Teilchengrößenverteilung, **dadurch gekennzeichnet, dass** das Maximum des Feinanteils zwischen 51 und 150 nm und das Maximum des Grobanteils zwischen 160 und 700 nm liegt.

2. Wässrige Polyurethan-Polyharnstoff-Dispersionen gemäß Anspruch 1, **dadurch gekennzeichnet, dass** die Polyurethan-Partikel des Feinanteils eine Teilchengröße zwischen 5 und 300 nm aufweisen.

3. Wässrige Polyurethan-Polyharnstoff-Dispersionen gemäß Anspruch 1, **dadurch gekennzeichnet, dass** die Polyurethan-Partikel des Feinanteils eine Teilchengröße zwischen 10 bis 275 nm aufweisen.

4. Wässrige Polyurethan-Polyharnstoff-Dispersionen gemäß Anspruch 1, **dadurch gekennzeichnet, dass** die Polyurethan-Partikel des Grobanteils eine Teilchengröße zwischen 125 bis 1250 nm aufweisen.

5. Wässrige Polyurethan-Polyharnstoff-Dispersionen gemäß Anspruch 1, **dadurch gekennzeichnet, dass** die Polyurethan-Partikel des Grobanteils eine Teilchengröße zwischen 160 bis 1000 nm aufweisen.

6. Wässrige Polyurethan-Polyharnstoff-Dispersionen gemäß Anspruch 1, **dadurch gekennzeichnet, dass** sie einen Feinanteil zwischen 10-50 Gew-% sowie einen Grobanteil zwischen 50-90 Gew.-% enthalten, wobei sich die Summe der Gewichtsanteile aus Grob-und Feinanteil zu 100 Gew.-% addieren.

7. Wässrige Polyurethan-Polyharnstoff-Dispersionen gemäß Anspruch 1, **dadurch gekennzeichnet, dass** der Festkörpergehalt zwischen 50 und 70 Gew.-% liegt.

8. Wässrige Polyurethan-Polyharnstoff-Dispersionen gemäß Anspruch 1, **dadurch gekennzeichnet, dass** diese einen Festkörpergehalt zwischen 55 und 65 Gew.-% aufweisen.

9. Wässrige Polyurethan-Polyharnstoff-Dispersionen gemäß Anspruch 1, **dadurch gekennzeichnet, dass** die Viskosität 1 bis 1500 mPa*s beträgt.

10. Wässrige Polyurethan-Polyharnstoff-Dispersionen gemäß Anspruch 1, **dadurch gekennzeichnet, dass** diese keine externen Emulgatoren enthalten.

11. Verfahren zur Herstellung der Polyurethan-Polyharnstoff-Dispersionen gemäß Anspruch 1, **dadurch gekennzeichnet, dass** die Komponenten ausgewählt aus der Gruppe der
I.1) Polyisocyanate,
I.2) Polyole mit zahlenmittleren Molekulargewichten von 200 bis 8 000 g/mol,
I.3) niedermolekulare Verbindungen des Molgewichts 62 bis 400 die in Summe über zwei oder mehr Hydroxyl- und/oder Aminogruppen verfügen,
I.4) Verbindungen, die über eine Hydroxy- oder Aminogruppe verfügen,
I.5) isocyanatreaktive, ionisch oder potentiell ionisch hydrophilierende Verbindungen,
I.6) isocyanatreaktive, nichtionisch hydrophilierenden Verbindungen,
so umgesetzt werden, dass zunächst ein harnstoffgruppenfreies, isocyanatfunktionelles Prepolymer hergestellt wird, wobei das Stoffmengenverhältnis von Isocyanatgruppen zu mit Isocyanat reaktiven Gruppen 1,0 bis 3,5 beträgt und anschließend die verbliebenen Isocyanat-Gruppen vor, während oder in Wasser nach dem Dispergieren aminofunktionell kettenverlängert oder -terminiert werden, wobei der Gehalt an =N⁺ =, =S⁺-, -COO- oder -SO₃⁻ oder PO₃²⁻ Gruppen zwischen 0,1 bis 15 Milliäquivalent pro 100g Festharz beträgt und das Äquivalentverhältnis von isocyanatreaktiven Gruppen der zur Kettenverlängerung eingesetzten Verbindungen zu freien Isocyanat-Gruppen des Prepolymers zwischen 40 bis 150 % liegt.

12. Beschichtungsmittel, enthaltend die Polyurethan-Polyharnstoff-Dispersionen gemäß Anspruch 1.

13. Verwendung der Polyurethan-Polyharnstoff-Dispersionen gemäß Anspruch 1 als Beschichtungsmittel zur Herstellung beschichteter Substrate.

14. Verwendung gemäß Anspruch 13, **dadurch gekennzeichnet, dass** die Substrate Textilien oder Leder sind.

15. Verwendung der Polyurethan-Polyharnstoff-Dispersionen gemäß Anspruch 1 im Bereich Polstermöbel, Arbeitsschutz und Autoinnenausstattung sowie zur Herstellung hoher Schaumauflagen in nur einem Strich.
